# DEMANDE DE BREVET EUROPEEN

(11) **EP 2 581 322 A1**
(43) Date de publication de la demande: **17.04.2013**
(21) Numéro de dépôt: 12187849.0
(22) Date de dépôt: 09.10.2012
(51) Int. Cl.: B65D 33/25, A44B 19/32, B65D 33/22

(54) **Sachet pour stérilisation**

(30) Priorité: 10.10.2011 FR 1159133
(71) Demandeur: S2F FLEXICO, 60119 Henonville (FR)
(72) Inventeur: Baret, Marianne, 75018 PARIS (FR)
(74) Mandataire: Regimbeau

(57) **Abrégé**

L'invention concerne un sachet d'emballage (1) pour la stérilisation d'aliments, comprenant des parois (10, 11) sur lesquelles est aménagé un dispositif de fermeture (20) comprenant des profilés de fermeture complémentaires (21, 22), ledit sachet étant caractérisé en ce que :
- le matériau constitutif des parois présente un point de ramollissement supérieur à 100°C, et
- les profilés de fermeture complémentaires (21, 22) sont adaptés pour sceller hermétiquement le sachet (1) quand celui-ci est placé dans une atmosphère (A) de température supérieure à 80°C.

L'invention concerne également un procédé de stérilisation de produits alimentaires (P) par utilisation d'un tel sachet.

## Description

La présente invention concerne le domaine des sachets d'emballage, en particulier les sachets d'emballage réalisés en matières thermoplastiques.

L'invention concerne également le domaine de la stérilisation et de la conservation des aliments.

La stérilisation et la conservation des aliments est une technique bien connue en soi, et pratiquée de longue date par les particuliers et les professionnels.

Les conserves sont traditionnellement réalisées dans des pots ou des bocaux en verre, qui sont résistants à haute température et permettent de protéger hermétiquement leur contenu de l'environnement extérieur.

Peu d'innovations ont été proposées jusqu'à présent pour renouveler cette pratique de la conservation des aliments. Pourtant les bocaux en verre comportent certains inconvénients : en particulier ils sont lourds, fragiles, et encombrants. De ce fait ils exigent en outre des précautions particulières de la part de leurs utilisateurs, ainsi que de leurs producteurs.

Des sachets ont par ailleurs été proposés, comme par exemple dans le document US 20060285778, qui décrit un sachet souple refermable au moyen de profilés de fermetures, et, dont les parois internes sont recouvertes, en-dessous desdits profilés et au niveau des extrémités latérales du sachet, d'un matériau adapté pour sceller localement les parois du sachet quand une chaleur est appliquée.

Le sachet décrit dans ce document n'est donc pas adapté à la stérilisation d'aliments puisqu'il ne peut être scellé hermétiquement.

Le document DE19951050 décrit un sachet muni de profilés de fermeture, dont les profilés sont recouverts d'une couche adhésive pour augmenter leur adhérence et simplifier leur forme.

Un tel sachet n'est pas adapté à la stérilisation d'aliments, puisque la couche adhésive ne permet pas de sceller hermétiquement.

Le document WO91/01927 décrit un procédé industriel de stérilisation d'aliments dans des sachets dédiés, préalablement scellés à l'exception d'une ouverture d'échappement de vapeur qui se ferme au cours de la stérilisation.

### PRESENTATION DE L'INVENTION

La présente invention a donc pour but de renouveler l'offre en matière de stérilisation et de conservation des aliments, tout en palliant les inconvénients de l'art antérieur évoqués ci-avant.

A cet égard, l'invention propose un sachet d'emballage pour la stérilisation d'aliments, comprenant des parois sur lesquelles est aménagé un dispositif de fermeture comprenant des profilés de fermeture complémentaire, ledit sachet étant **caractérisé en ce que :**
- le matériau constitutif des parois présente, à une température de 100°C, une tenue suffisante pour conserver ses propriétés de confinement, et
- les profilés de fermeture complémentaires sont adaptés pour sceller hermétiquement le sachet quand celui-ci est placé dans une atmosphère de température supérieure à 80°C.

Avantageusement, mais facultativement, le sachet d'emballage selon l'invention comprend en outre l'une au moins des caractéristiques suivantes :
- les parois du sachet sont réalisées en un matériau formant barrière à l'oxygène.
- les parois du sachet sont réalisées en un matériau parmi le groupe suivant : polypropylène, complexe polyéthylène téréphtalate-polypropylène, ou complexe polypropylène - polyamide.
- Les parois du sachet présentent une température de fusion supérieure à 120°.
- Le sachet comprend plusieurs paires de profilés de fermeture complémentaires, disposées à des distances différentes de l'embouchure du sachet.
- Au moins une paire de profilés de fermeture complémentaires présente plusieurs niveaux de verrouillage.
- Au moins une paire de profilés de fermeture complémentaires est au moins partiellement couverte d'une colle activable à partir d'une température de 50°C, ledit sachet étant scellé hermétiquement par fusion de la colle quand il est disposé dans une atmosphère de température supérieure à 50°C.
- Au moins un profilé femelle présente une partie d'engagement sous forme de cavité, dans laquelle est disposée une bande de colle activable à partir d'une température de 50°C.
- Au moins une paire de profilés de fermeture complémentaires présente des parties d'engagement présentant une température de fusion comprise entre 60°C et 80°C, le sachet étant scellé hermétiquement par fusion des parties d'engagement quand il est placé dans une atmosphère de température supérieure ou égale à la température de fusion des parties d'engagement.
- Les parties d'engagement sont composées d'un polymère d'éthylène acétate de vinyle ou d'éthylène acrylate d'éthyle, coextrudé sur les parois du sachet.
- Les profilés de fermeture complémentaires sont des profilés en secteur de cylindre de révolution.
- Le dispositif de fermeture est positionné à proximité de l'embouchure du sachet formée par les bords supérieurs des parois, mais en retrait par rapport auxdits bords supérieurs des parois du sachet.

L'invention concerne en outre l'utilisation d'un sachet d'emballage selon l'invention pour la stérilisation et la conservation de produits alimentaires.

A cet effet, l'invention propose un procédé de stérilisation de produits alimentaires, comprenant les étapes consistant à :
- insérer, dans un sachet selon l'invention, une quantité de produits alimentaires à stériliser,
- fermer le sachet au moyen du dispositif de fermeture du sachet,
- porter le sachet rempli et fermé dans une atmosphère à une température supérieure ou égale à 100°C
- maintenir le sachet à température jusqu'à ce que le dispositif de fermeture scelle hermétiquement le sachet et que les produits alimentaires soient stérilisés.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :
- la figure 1 représente un sachet, d'emballage, vu en perspective, selon l'invention.
- Les figures 2a à 2e illustrent différents modes de réalisation de dispositifs de fermeture utilisés dans le sachet d'emballage selon l'invention.
- La figure 3 présente un mode de réalisation dans lequel le dispositif de fermeture présente plusieurs étages de verrouillage.
- La figure 4 présente un mode de réalisation dans lequel le dispositif de fermeture comprend plusieurs paires de profilés, au moins l'une adaptée pour permettre de sceller le sachet.

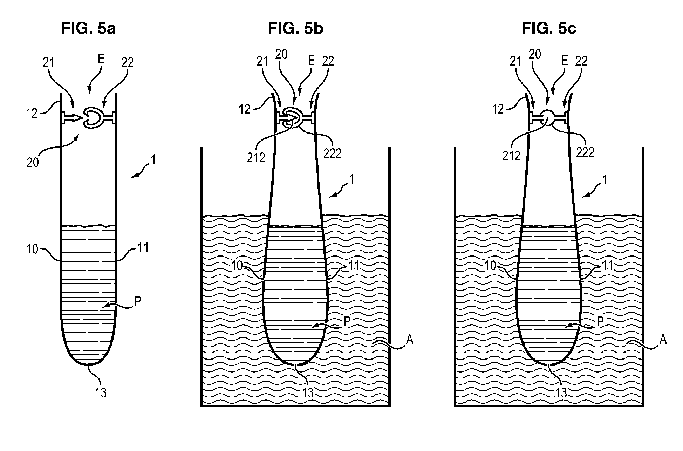

- Les figures 5a à 5c illustrent des étapes d'un procédé de stérilisation au cours duquel on utilise le sachet d'emballage selon l'invention.

### DESCRIPTION DETAILLEE DE L'INVENTION

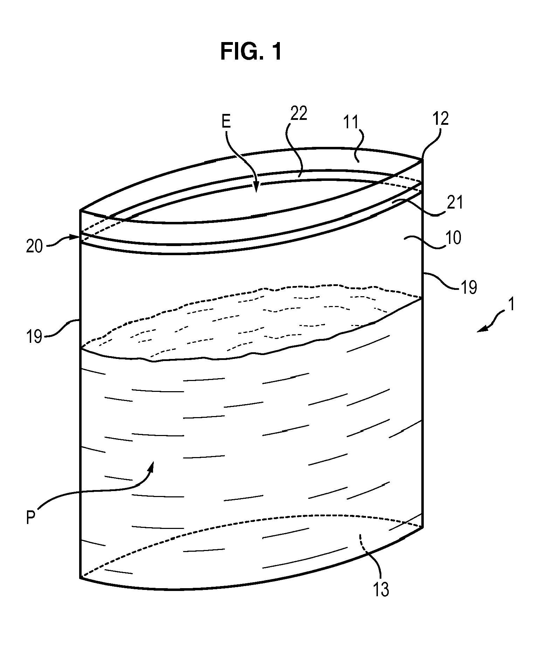

En référence à la figure 1 est représenté un sachet d'emballage 1 selon l'invention.

Ce sachet comprend de préférence deux parois 10 et 11, délimitées par des bords respectivement supérieurs 12 et inférieurs 13, et des bords transversaux 19.

Les parois 10, 11 du sachet peuvent faire l'objet de nombreux modes de réalisation. Il s'agit de préférence de parois en matériaux thermoplastiques.

Ces parois 10 et 11 peuvent être mono ou multicouches et mono ou multi matériaux. Typiquement, elles peuvent être réalisées à partir d'un film plastique, ou dans des feuilles de matériau complexe telles qu'un support papier revêtu d'une couche de matériau thermoplastique ou encore d'une couche thermoplastique métallisée.

Cependant, elles sont de préférence réalisées en un matériau capable de résister à une température supérieure à 100°C, c'est-à-dire en un matériau présentant une tenue suffisante, au moins à une température de 100°C, pour conserver ses propriétés mécaniques et chimiques de confinement de produits alimentaires. Par exemple, le point de ramollissement Vicat du matériau est strictement supérieur à 100°C. Typiquement un tel matériau peut être un matériau barrière à l'oxygène tel que du polypropylène (PP) ou du polyéthylène téréphtalate (PET) ou un autre matériau barrière à l'oxygène tel qu'un complexe polypropylène/polyamide ou un complexe PET - PP, ces matériaux présentant une température de fusion supérieure à 100°C.

Ces deux parois 10 et 11 peuvent être obtenues à partir d'un seul et même film retourné le long du bord inférieur 13, et soudé le long de ses deux bords transversaux parallèles 19.

En variante, ces deux parois 10 et 11 peuvent être constituées de deux feuilles séparées, c'est-à-dire deux entités distinctes, assemblées sur trois de leurs côtés.

Les bords supérieurs 12 des parois 10 et 11 forment une embouchure E du sachet 1.

Le sachet 1 est en outre muni d'un dispositif de fermeture 20, aménagé sur les parois 10 et 11, avantageusement vers l'intérieur du sachet. En outre, le dispositif de fermeture 20 est de préférence positionné à proximité de l'embouchure E du sachet 1. Cependant, il est avantageusement positionné avec un léger retrait par rapport aux bord supérieur 12 des parois 10 et 11 du sachet 1, afin que l'on puisse ouvrir et fermer le sachet en le saisissant par une partie des parois 10 et 11 positionnée entre le dispositif de fermeture 20 et le bord 12 des parois.

Selon l'invention, le sachet est adapté pour résister au moins à une température de 100°C, et de préférence à une température supérieure à 120°C, ce qui est assuré par le matériau constitutif des parois, par exemple le polypropylène (PP) ou le polyéthylène téréphtalate (PET), qui présente une température de fusion strictement supérieure à 100°C, typiquement 120°C.

En outre, selon l'invention, le dispositif de fermeture 20 est adapté pour sceller hermétiquement le sachet 1 lorsque celui-ci est placé dans une atmosphère à une température supérieure à 80°C, typiquement à une température de 100°C.

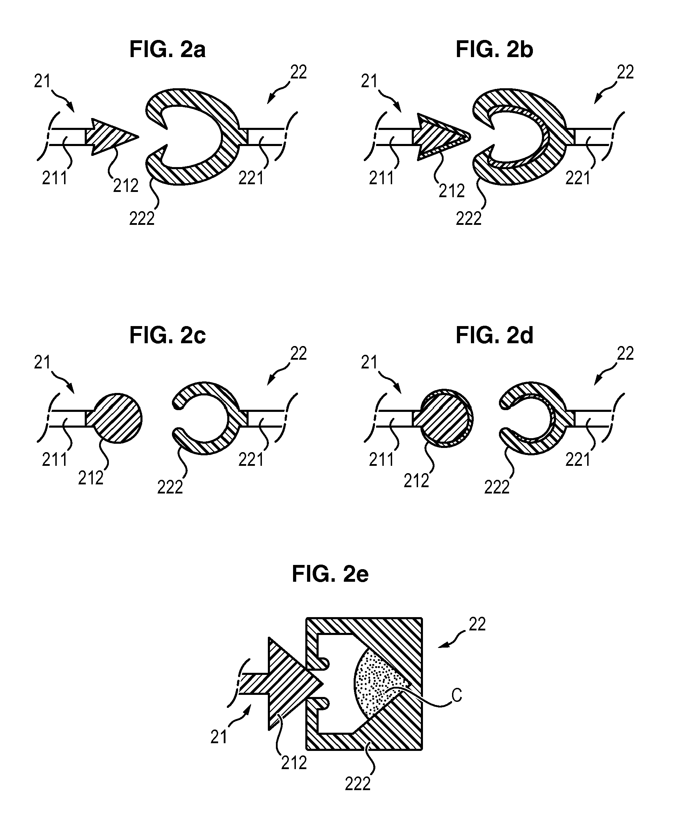

Pour ce faire, plusieurs modes de réalisations sont envisageables, dont certains sont représentés en figures 2a à 2e.

Ce dispositif de fermeture 20 peut être constitué d'éléments distincts des parois 10 et 11, rapportés sur celles-ci par exemple par soudage, ou venus de matière avec celles-ci, par exemple coextrudés avec les parois.

Le dispositif de fermeture 20 peut être constitué de profilés complémentaires 21, 22, tel que des profilés mâle 21 et femelle 22.

En outre, pour permettre de sceller le sachet 1, les profilés de fermeture 21, 22, peuvent être constitués, au moins en partie, d'un matériau solide adapté pour atteindre un niveau de ramollissement suffisant pour permettre la soudure des deux profilés 21, 22, à une température de l'ordre de 100°C.

Par exemple, les parties 212 et 222 des profilés 21 et 22 formant l'engagement et permettant la fermeture du sachet peuvent être constituées d'un polymère d'éthylène acétate de vinyle (EVA) ou d'éthylène acrylate d'éthyle (EEA), dont la température de fusion est comprise entre 60°C et 80°C. Ce mode de réalisation est illustré en figures 2a et 2c.

Les parties 211 et 221 des profilés 21 et 22 liées aux parois 10 et 11 peuvent alors être en même matériau que celles-ci (typiquement PP).

Alternativement, les parties d'engagement 212 et 222 des profilés 21 et 22 peuvent être recouvertes, partiellement ou totalement, d'une colle activable à chaud (thermoactivable), c'est-à-dire à une température supérieure à 50°C, typiquement à une température de l'ordre de 100°C. C'est ce qui est représenté en figures 2b et 2d. Ainsi, en plaçant le sachet 1 dans une atmosphère à une température de 100°C, la colle est activée par la température et solidarise ensemble les parties d'engagement 212 et 222, pour sceller hermétiquement le sachet 1.

Enfin, et en référence à la figure 2e, un mode de réalisation alternatif est représenté dans lequel une partie d'engagement 222 d'un profilé femelle 22, sous forme de cavité, est partiellement remplie d'une bande de colle thermoactivable, c'est-à-dire activable à chaud, typiquement à une température supérieure à 50°C, et de préférence à une température de l'ordre de 100°C.

Sur la figure 2e on observe un mode de réalisation particulier dans lequel le profilé mâle 21 présente, sur sa partie d'engagement 212, une forme de pointe de section triangulaire, et la partie d'engagement 222 du profilé femelle 22 est une forme complémentaire de celui-ci. Alors la bande de colle C disposée dans la cavité 222 formée par le profilé femelle peut prendre une forme de tronçon de cylindre de révolution.

Selon un mode de réalisation alternatif, le dispositif de fermeture 20 du sachet 1 peut comprendre deux profilés complémentaires, dont au moins l'un comporte plus d'un étage de verrouillage.

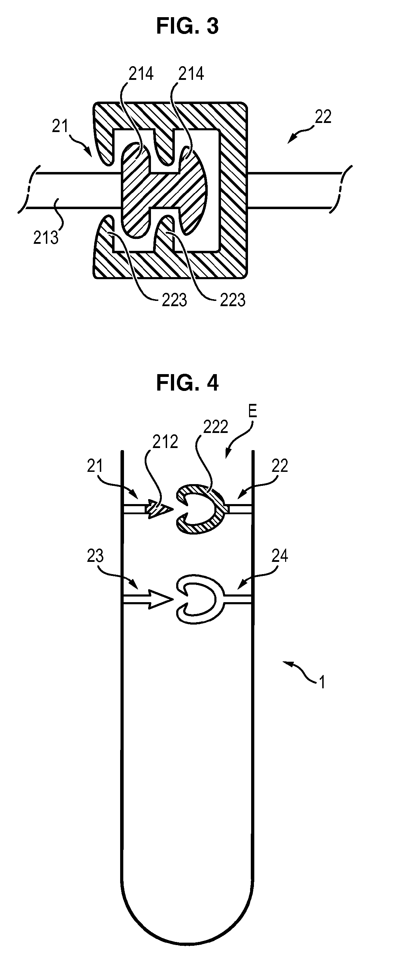

Un exemple particulier d'un tel dispositif de fermeture est représenté en figure 3, dans lequel la fermeture comporte un profilé mâle 21 et un profilé femelle 22, le profilé mâle étant pourvu d'une tige 213 munie de deux niveaux d'excroissances 214, et le profilé femelle 22 comprenant deux niveaux de nervures 223 adaptées pour coopérer avec les excroissances 214 du profilé mâle. Le profilé femelle 22, respectivement le profilé mâle 21 peut ainsi avoir un niveau de nervures ou plus, respectivement un niveau d'excroissances ou plus, ce qui permet d'envisager de nombreux modes de réalisation.

On pourra également se référer à la demande n°1156444 pour d'autres modes de réalisation.

Le cas échéant, les profilés 21 et 22 sont adaptés pour présenter au moins un étage de verrouillage permettant de sceller hermétiquement le sachet à une température supérieure à 80°C voire 100°C, l'étage de verrouillage correspondant étant réalisé selon les modes décrits en référence à la figure 2.

Par exemple plusieurs étages de verrouillage peuvent être adaptés pour sceller le sachet, ce qui rend l'utilisateur plus confiant envers l'herméticité du sachet une fois celui-ci scellé que si les profilés ne comportent qu'un étage de verrouillage.

Selon un autre mode de réalisation, le dispositif de fermeture 20 du sachet 1 peut comprendre deux niveaux de profilés 21, 22, 23, 24, ou plus, chaque niveau comprenant un profilé mâle 21, 23, et un profilé femelle correspondant 22, 24, et les paires de profilés étant positionnées à des distances différentes de l'embouchure du sachet. Cet exemple est illustré en figure 4.

En outre, une ou plusieurs paires de profilés peut être adaptée pour sceller le sachet par la réalisation explicitée en référence à la figure 2.

Par exemple, en référence à la figure 4, seule la paire de profilés 31, 32, la plus proche de l'embouchure peut être adaptée pour permettre de sceller le sachet. Ainsi, une fois le sachet scellé, on peut le rouvrir ultérieurement en découpant ses parois entre deux niveaux de profilés, et les profilés restant peuvent être utilisés pour refermer et rouvrir le sachet ultérieurement.

Tout ou partie des paires de profilés peut être pourvu de plusieurs niveaux de verrouillages selon la réalisation dont un exemple est illustré en figure 3.

Enfin, pour une plus grande surface de contact entre les parties d'engagement 212 et 222 des profilés 21 et 22, celles-ci peuvent être en secteurs de cylindre de révolution, comme illustré dans les figures 2c et 2d.

Le sachet 1 présentant les caractéristiques décrites ci-avant, peut donc être utilisé pour la stérilisation et la conservation de produits alimentaires. En effet, il résiste à une température de 100°C, à laquelle on porte les produits pour les stériliser, et grâce à cette température son moyen de fermeture scelle hermétiquement le sachet, le protégeant ainsi de toute contamination ou oxydation de l'atmosphère extérieure.

En référence à la figure 3, on va maintenant décrire un procédé de stérilisation de produits alimentaires P, par utilisation d'un sachet 1 selon l'invention.

Dans la figure 3a, on insère, dans un sachet 1, des produits alimentaires P à stériliser et à conserver.

Dans la figure 3b, on ferme le sachet 1 au moyen du dispositif de fermeture 20, de préférence en engageant les parties 212 et 222 des profilés de fermeture complémentaires 21 et 22. Puis on place le sachet 1 rempli des produits alimentaires P dans une atmosphère A dont la température est portée à 100°C. Typiquement, dans les applications culinaires traditionnelles, l'atmosphère A est un bain-marie, c'est-à-dire un récipient d'eau portée à ébullition ou dans un autoclave à 115°C.

Enfin comme dans la figure 3c, on laisse fondre partiellement ou totalement, grâce à la température de l'atmosphère A, ou à des vapeurs provenant de celle-ci ou des produits alimentaires P, les parties d'engagement 212 et 222 des profilés 21 et 22 afin qu'elles scellent hermétiquement le sachet 1. Alternativement, la colle activable à chaud sur les parties d'engagement 212 et 222 est activée par la température de l'atmosphère.

On conserve en outre le sachet 1 dans l'atmosphère A suffisamment longtemps pour que la stérilisation des produits alimentaires P ait lieu, typiquement entre quelques dizaines de minutes et quelques heures pour des conserves d'aliments traditionnelles.

Une fois ce procédé effectué, on obtient un sachet 1 hermétiquement clos, et contenant des produits alimentaires P stérilisés, pouvant être conservés aussi longtemps que des conserves traditionnelles.

Bien entendu, la présente invention n'est nullement limitée aux formes de réalisation décrites ci-dessus et représentées sur les dessins, mais l'homme du métier saura y apporter de nombreuses variantes et modifications.

## Revendications

1. Sachet d'emballage (1), pour la stérilisation d'aliments, comprenant des parois (10,11) sur lesquelles est aménagé un dispositif de fermeture (20), comprenant des profilés de fermeture complémentaires (21, 22), ledit sachet **(1) étant caractérisé en ce que :**
- le matériau constitutif de la paroi présente, à une température de 100°C, une tenue suffisante pour conserver ses propriétés de confinement, et
- les profilés de fermeture complémentaires (21, 22) sont adaptés pour sceller hermétiquement le sachet (1) quand celui-ci est placé dans une atmosphère (A) de température supérieure à 80°C.

2. Sachet d'emballage selon la revendication 1, dans lequel les parois (10, 11) du sachet (1) sont réalisées en un matériau formant barrière à l'oxygène.

3. Sachet d'emballage (1) selon la revendication 2, dans lequel les parois (10, 11) du sachet (1) sont réalisées en un matériau parmi le groupe suivant : polypropylène, complexe polyéthylène téréphtalate - polypropylène, ou complexe polypropylène - polyamide.

4. Sachet d'emballage (1) selon l'une des revendications 1 à 3, **caractérisé en ce que** les parois (10, 11) présentent une température de fusion supérieure à 120°.

5. Sachet d'emballage (1) selon la revendication 1, comprenant plusieurs paires de profilés de fermeture complémentaires (21, 22, 23, 24), disposées à des distances différentes de l'embouchure (E) du sachet (1).

6. Sachet d'emballage (1) selon l'une des revendications 4 ou 5, dans lequel au moins une paire de profilés de fermeture complémentaires (21, 22, 23, 24) présente plusieurs niveaux de verrouillage.

7. Sachet d'emballage (1) selon l'une des revendications 4 à 6, dans lequel au moins une paire de profilés de fermeture complémentaires (21, 22, 23, 24) est au moins partiellement couverte d'une colle activable à partir d'une température de 50°C, ledit sachet (1) étant scellé hermétiquement par fusion de la colle quand il est disposé dans une atmosphère (A) de température supérieure à 50°C.

8. Sachet d'emballage (1) selon la revendication précédente, dans lequel au moins un profilé femelle (22) présente une partie d'engagement (222) sous forme de cavité, dans laquelle est disposée une bande de colle (C) activable à partir d'une température de 50°C.

9. Sachet d'emballage (1) selon l'une des revendications 4 à 6, dans lequel au moins une paire de profilés de fermeture complémentaires (21, 22) présente des parties d'engagement (212, 222) présentant une température de fusion comprise entre 60°C et 80°C, ledit sachet (1) étant scellé hermétiquement par fusion des parties d'engagement (212, 222) quand il est placé dans une atmosphère (A) de température supérieure ou égale à la température de fusion des parties d'engagement (212, 222).

10. Sachet d'emballage (1) selon la revendication précédente, dans lequel lesdites parties d'engagement (212, 222) sont composées d'un polymère d'éthylène acétate de vinyle ou d'éthylène acrylate d'éthyle, coextrudé sur les parois (10, 11) du sachet (1).

11. Sachet d'emballage (1) selon l'une des revendications 4 à 10, dans lequel les profilés de fermeture complémentaires (21, 22) sont des profilés en secteur de cylindre de révolution.

12. Sachet d'emballage (1) selon l'une des revendications précédentes, dans lequel le dispositif de fermeture (20) est positionné à proximité de l'embouchure (E) du sachet (1) formée par les bords supérieurs (12) des parois (10, 11), mais en retrait par rapport auxdits bords supérieurs (12) des parois (10, 11) du sachet (1).

13. Utilisation d'un sachet d'emballage (1) selon l'une des revendications précédentes pour la stérilisation et la conservation de produits alimentaires (P).

14. Procédé de stérilisation de produits alimentaires (P), comprenant les étapes consistant à :
- insérer, dans un sachet (1) selon l'une des revendications 1 à 12, une quantité de produits alimentaires (P) à stériliser,
- fermer le sachet (1) au moyen du dispositif de fermeture (20),
- porter le sachet (1) rempli et fermé dans une atmosphère (A) à une température supérieure ou égale à 100°C
- maintenir le sachet (1) à température jusqu'à ce que le dispositif de fermeture (20) scelle hermétiquement le sachet (1) et que les produits alimentaires (P) soient stérilisés.
